# EUROPÄISCHE PATENTANMELDUNG

(11) **EP 3 536 549 A1**
(43) Veröffentlichungstag der Anmeldung: **11.09.2019**
(21) Anmeldenummer: 19169900.8
(22) Anmeldetag: 13.06.2013
(51) Int. Cl.: B60N 2/28, B60N 2/42, B60N 2/427

(54) **KINDERSITZ ODER BABYSCHALE ZUR ANBRINGUNG AUF EINEM KRAFTFAHRZEUGSITZ**

(30) Priorität: 18.06.2012 DE 202012102240 U; 04.07.2012 DE 202012102471 U
(62) Teilanmeldung aus: 17194344.2
(71) Anmelder: CYBEX GmbH, 95448 Bayreuth (DE)
(72) Erfinder: Pos, Martin, 95444 Bayreuth (DE)
(74) Vertreter: Pfrang, Tilman

(57) **Zusammenfassung**

Die Erfindung betrifft einen Kindersitz (10) oder Babyschale zur Anbringung auf einem Kraftfahrzeugsitz, insbesondere Kraftfahrzeugseitensitz, mit einer Sitzschale (20) und einem an dieser angebrachten Seitenaufprallschutz, der von einer, insbesondere innerhalb einer Standardbreite gelegenen, Ruhestellung in eine, insbesondere außerhalb derselben gelegene, Funktionsstellung und umgekehrt bringbar ist, wobei der Seitenaufprallschutz, insbesondere beidseitig der Sitzschale (20), so positioniert ist, dass er etwaige Seitenkräfte hinter dem Rücken eines im Kindersitz sitzenden Kindes vorbei überträgt und in die Sitzschale (20) einleitet nicht unmittelbar auf den Körper des Kindes überträgt, sondern am Körper des Kindes vorbei und in die Sitzschale einleitet.

## Beschreibung

Die Erfindung betrifft einen Kindersitz oder eine Babyschale zur Anbringung auf einem Kraftfahrzeugsitz gemäß dem Oberbegriff des Patentanspruchs 1, sowie einen Seitenaufprallschutz zur Anbringung an einem solchen Sitz oder einer solchen Babyschale.

In diesem Zusammenhang sei angemerkt, dass im Rahmen dieser Erfindung der Begriff "Kindersitz" als Oberbegriff für Kindersitze und Babyschalen zu verstehen ist. Somit sind für einen Kindersitz vorgesehene Merkmale im Rahmen dieser Erfindung grundsätzlich auch auf eine Babyschale anwendbar und umgekehrt, solange nichts Gegenteiliges erwähnt ist. Selbiges gilt für den Begriff "Kind", der ebenfalls als Oberbegriff für Kinder und Babys sowie Kleinkinder zu verstehen ist.

Kindersitze und Babyschalen, die auf einem Kraftfahrzeugsitz angebracht werden können, sind seit geraumer Zeit bekannt. Solche Kindersitze oder Babyschalen dienen als Sitzgelegenheit für Kleinkinder, Babys und Kinder und bieten diesen, insbesondere im Falle eines Unfalls, erhöhten Schutz. Die Befestigung derartiger Kindersitze erfolgt in aller Regel mit dem Gurtsystem des Autos oder mittels Isofix-Klinken. Eine derartige Befestigung sichert den Kindersitz im Falle eines Unfalls auf den Kraftfahrzeugsitz, so dass dieser, insbesondere bei einem Auffahrunfall, auf dem Kraftfahrzeugsitz gehalten und nicht nach vorne geschleudert wird. Als problematisch haben sich diese Sitze jedoch bei einem Seitenaufprall erwiesen, da sowohl eine Gurtbefestigung als auch eine Befestigung mittel Isofix-Klinken den Kindersitz oder die Babyschale nur sehr unzureichend gegen eine Seitwärts-Bewegung des Sitzes schützt. Dies ist insbesondere bei einem Seitenaufprall jedoch wesentlich für einen möglichst guten Schutz des in dem Kindersitz befindlichen Kindes. Aus diesem Grund wurde in der Vergangenheit an bestehenden Kindersitzen und Babyschalen ein Seitenaufprallschutz angebracht, wie er beispielsweise in der DE 20 2009 010 536 U1 oder in der US 2009/0152913 A1 beschrieben ist. Bei diesen dort offenbarten Vorrichtungen handelt es sich um ein energieabsorbierendes Element in Form eines Faltbandes oder eines Luftkissens, das sich seitlich des Kindersitzes erstreckt. Es hat sich jedoch in der Vergangenheit gezeigt, dass Vorrichtungen, wie sie in der DE 20 2009 010 536 U1 oder der US 2009/0152913 A1 beschrieben sind, nicht in der Lage sind, ein in dem Kindersitz befindliches Kind optimal zu schützen, da eine Kraftübertragung bei einem Seitenaufprall bei den dort gezeigten Konstruktionen unmittelbar auf das in dem Kindersitz befindliche Kind erfolgt und die dort dargestellten Kindersitze nur unzureichend in der Lage sind, eine Aufprallenergie zu absorbieren und/oder abzuleiten.

Der Erfindung liegt die Aufgabe zugrunde, einen Kindersitz zur Anbringung auf einem Kraftfahrzeugsitz zur Verfügung zu stellen, der vorgenannte Nachteile vermeidet und einen verbesserten Seitenaufprallschutz zur Verfügung stellt, der die auf ein in dem Kindersitz befindliches Kind wirkenden Kräfte reduziert.

Diese Aufgabe wird durch einen Kindersitz gemäß Patentanspruch 1 gelöst.

Insbesondere wird diese Aufgabe durch einen Kindersitz zur Anbringung auf einem Kraftfahrzeugsitz, insbesondere Kraftfahrzeugseitensitz, mit einer Sitzschale und einem an dieser angebrachten Seitenaufprallschutz, der von einer, beispielsweise innerhalb einer Standardbreite von 440 mm gemäß dem AGREEMENT CONCERNING THE ADOPTION OF UNIFORM TECHNICAL PRESCRIPTIONS FOR WHEELED VEHICLES, EQUIPMENT AND PARTS WHICH CAN BE FITTED AND/OR BE USED ON WHEELED VEHICLES AND THE CONDITIONS FOR RECIPROCAL RECOGNITION OF APPROVALS GRANTED ON THE BASIS OF THESE PRESCRIPTIONS, (Revision 2, including the amendments which entered into force on 16 October 1995), E/ECE/324, E/ECE/TRANS/505, Rev.1/Add.15/Rev.6 vom 19 May 2009, Annex 17 - Appendix 2, des Kindersitzes gelegenen, Ruhestellung in eine, beispielsweise außerhalb der Standardbreite gelegene, Funktionsstellung und umgekehrt bringbar ist, gelöst, wobei der Seitenaufprallschutz, insbesondere beidseitig der Sitzschale, so positioniert ist, dass er etwaige Seitenkräfte hinter dem Rücken eines im Kindersitz sitzenden Kindes vorbei überträgt und in die Sitzschale einleitet.

Ein wesentlicher Punkt der Erfindung liegt hierbei darin, dass der Seitenaufprallschutz so an der Sitzschale angebracht ist, dass eine Kraft- bzw. Energieübertragung bei einem Seitenaufprall nicht unmittelbar auf den Körper des Kindes übertragen, sondern am Körper des Kindes vorbei und in die Sitzschale eingeleitet wird. Auf diese Weise dient der Seitenaufprallschutz zum einen als Knautschzone und darüber hinaus als Kraftumlenkvorrichtung, die bei einem Unfall etwaig auftretende Seitenkräfte nicht linear auf den Körper des Kindes, sondern linear am Körper des Kindes vorbei in die Sitzschale einleitet, die ihrerseits Dämpfungseigenschaften aufweist. In äußerst vorteilhafter Weise ist es so möglich, die auf ein in dem Kindersitz befindliches Kind wirkenden Kräfte deutlich zu reduzieren, so dass eine Verletzungswahrscheinlichkeit des Kindes im Vergleich mit bisher bekannten Kindersitzen deutlich verringert ist.

Gemäß einer Ausführungsform der Erfindung umfasst der Seitenaufprallschutz ein Seitenelement, das in Ruhestellung an einer Seitenfläche der Sitzschale, insbesondere im Wesentlichen flach, anliegt oder im Wesentlichen in die Sitzschale, respektive in die Seitenfläche der Sitzschale eingeschoben oder an diese an- oder in diese eingeklappt ist. Auf diese Weise kann gewährleistet werden, dass der erfindungsgemäße Kindersitz durch den vorgesehen Seitenaufprallschutz in Ruhestellung nicht über eine vorgegebene Breite, insbesondere Standardbreite, respektive Hüllkurve des Kindersitzes hinaus ragt und bei angelegtem bzw. eingeschobenem Seitenelement eine übliche Breite eines Kindersitzes nicht übersteigt, was die Handhabbarkeit des erfindungsgemäßen Kindersitzes zusätzlich begünstigt.

Des Weiteren ist das erfindungsgemäße Seitenelement zur Benutzung in Funktionsstellung ausklappbar, ausschwenkbar, teleskopartig ausfahr- oder ausschieb- oder ausziehbar oder alternativ zu einer solchen im Wesentlichen mit dem Kindersitz verbundenen Ausführungsform aus einer Ruhestellung des Seitenelements entnehmbar und an einer entsprechenden Aufnahme für das Seitenelement an dem Kindersitz, d.h. insbesondere an der Sitzschale des Kindersitzes anbringbar und insbesondere auch befestigbar. An dieser Stelle sei erwähnt, dass es erfindungsgemäß ebenso möglich ist, nicht nur das Seitenelement an dem Kindersitz anzubringen, sondern ein bestehender Kindersitz auch dadurch zu einem erfindungsgemäßen Kindersitz umgerüstet werden kann, indem ein Seitenaufprallschutz mit einem Seitenelement, das beispielsweise als Klappteil ausgebildet ist, an der Sitzschale des Kindersitzes in einer vorbeschriebenen Position befestigt wird, wobei der Seitenaufprallschutz hierbei beispielsweise durch Kleben, Nieten oder Verschrauben mit der Sitzschale des Kindersitzes verbunden werden kann. Der Seitenaufprallschutz weist hierzu ein Seitenelement auf, das als Klappteil ausgebildet ist, das zur Verbringung von einer Ruhestellung in eine Funktionsstellung und umgekehrt um eine Achse drehbeweglich ist, wobei das Klappteil wenigstens einen Halteanschlag aufweist, an welchen in Funktionsstellung ein Halteriegel angreift, so dass das Klappteil in Funktionsstellung arretiert ist, wobei die Arretierung durch eine Betätigung einer Entriegelungstaste oder eines Entriegelungsschiebers von einem Benutzer lösbar ist, die/der vorzugsweise jeweils einem oder auch zwei oder mehreren Halteriegeln zugeordnet ist. Ein solcher Seitenaufprallschutz umfasst vorteilhafterweise eine Basis- bzw. Befestigungsplatte, mit welcher der Seitenaufprallschutz an der Sitzschale des Kindersitzes anliegt und mit dieser verbunden ist. Auf dieser Basis- bzw. Befestigungsplatte ist das vorbeschriebene System aus Klappteil, Achse, Halteanschlag und Halteriegel befestigt.

Gemäß einer weiteren Ausführungsform der Erfindung kann der Seitenaufprallschutz auch konstruktiv in der Sitzschale des Kindersitzes integriert sein, wobei an der Sitzschale des Kindersitzes beispielsweise eine spezielle Aufnahme für einen solchen Seitenaufprallschutz vorteilhaft ist.

Erfindungsgemäß vorgesehen ist eine teleskopartig ausfahr- bzw. ausziehbare Variante des Seitenelements, das vorzugsweise einen pilz- oder tellerartigen Endabschnitt aufweist, der in Ruhestellung unmittelbar und im Wesentlichen flach an der Seitenfläche der Sitzschale anliegt und in Funktionsstellung mittels einer teleskopartigen Vorrichtung aus einer in die Sitzschale eingeschobenen Position in eine aus der Sitzschale ausgeschobenen bzw. ausgezogenen Position verbringbar ist. In dieser Funktionsposition liegt der pilz- oder tellerartige Endabschnitt des Seitenelements sodann an einer Kraftfahrzeuganlagefläche oder einem benachbart angeordneten Kindersitz oder einer benachbart angeordneten Seitenelement eines anderen Kindersitzes an.

Erfindungsgemäß ist das Seitenelement hinsichtlich seiner Länge und/oder seiner Höhenposition einstellbar. Eine einstellbare Länge des Seitenelements ist insbesondere bei einer Verwendung des erfindungsgemäßen Kindersitzes in verschiedenen Kraftfahrzeugtypen äußerst vorteilhaft, da eine Befestigungsvorrichtung für einen Kindersitz üblicherweise bei unterschiedlichen Fahrzeugtypen unterschiedlich weit von einer Kraftfahrzeugtür entfernt ist. Ein solcher Entfernungsunterschied kann durch ein hinsichtlich seiner Länge einstellbares Seitenelement erfindungsgemäß äußerst einfach ausgeglichen werden. Für eine solche Längeneinstellung und, vorteilhafterweise auch Fixierung in der gewünschten Länge, ist erfindungsgemäß ein Rast-, Schnapp-, Klapp-, Ratschen-, Teleskop-, Gewinde- bzw. Schraub- oder Flaschenzugmechanismus vorgesehen, wobei vorgenannte Mechanismen auch miteinander in Kombination eingesetzt werden können, beispielsweise um das Seitenelement zunächst auf die gewünschte Länge einzustellen und anschließend in der gewünschten zu fixieren, wobei die Fixierung nach einem Gebrauch des Kindersitzes in der Funktionsstellung wieder gelöst werden kann, um das Seitenelement wiederum in die Ruhestellung zu verbringen. Besonders vorteilhaft ist hierbei ein Teleskopmechanismus, mit dem beispielsweise ein rohrartig ausgebildetes Seitenelement auf die gewünschte Länge eingestellt wird. Eine anschließende Fixierung in dieser gewünschten Länge kann sodann beispielsweise mittels eines Schnappmechanismus erfolgen.

Gemäß einer weiteren Variante der Erfindung kann das Seitenelement, wie vorerwähnt, auch als Klappteil ausgebildet sein. Dieses Klappteil kann entweder von einer eingeklappten Ruhestellung in eine ausgeklappte Funktionsstellung positioniert werden, oder gemäß einer weiteren vorteilhaften Ausführungsform der Erfindung auch Zwischenpositionen zwischen der Ruheposition und der voll ausgeklappten Funktionsstellungsposition einnehmen, indem das Klappteil mit einem Winkel bezüglich der Sitzschale des Kindersitzes von weniger als 90° ausgeklappt wird. In diesem Fall kann das Klappteil beispielsweise eine Zahnung aufweisen, durch die eine Mehrzahl von Halteanschlägen definiert wird, in welche korrespondierende Halteriegel - es kann sich hierbei um einen oder zwei Halteriegel handeln - unter einer Arretierung und Fixierung des Klappteils eingreift. Auf diese Weise kann die seitliche Erstreckung des Seitenelements hinsichtlich ihrer Länge variiert werden, wobei das Klappteil durch den in den Halteanschlag eingreifenden Halteriegel sicher fixiert und abgestützt wird. Auf diese Weise ist es erfindungsgemäß möglich, eine Distanz zwischen Kindersitz und einer seitlichen Kraftfahrzeuganlagefläche auszugleichen, die möglicherweise von Fahrzeugtyp zu Fahrzeugtyp unterschiedlich sein kann. Das Klappteil kann hierzu beispielsweise mit einem Ratschenmechanismus versehen sein.

Diesbezüglich sei erwähnt, dass eine Anlage des pilz- oder tellerartigen Endabschnitts des Seitenelements des Seitenaufprallschutzes üblicherweise an einer geschlossenen Autotür abgestützt wird, wobei das Seitenelement so weit verlängert oder ausgeklappt wird, bis der pilz- oder tellerartige Endabschnitt des Seitenelements bei einem korrekt positionierten und befestigten, beispielsweise mittels Isofix-Klinken, Kindersitz an der Autotür oder einem anderen festen Karosserieteil oder einem benachbarten Kindersitz anliegt. Diesbezüglich wird darauf hingewiesen, dass auch eine Kombination von Klapp- und Auszugsmechanismus für das Seitenelement denkbar ist, beispielsweise indem das Seitenelement zunächst ausgeklappt und anschließend teleskopartig ausgezogen wird, bis eine sachgerechte Anlage des Endabschnitts an einer Kraftfahrzeugseitenfläche gewährleistet ist. Diesbezüglich sei ferner darauf hingewiesen, dass der Endabschnitt, wie vorerwähnt, pilz- oder tellerartig ausgebildet sein kann. Gemäß einer weiteren Ausführungsform der Erfindung ist es jedoch ebenfalls möglich, einen solchen pilz- oder tellerartigen Endabschnitt auf den Endabschnitt des Seitenelements aufzustecken, aufzuschrauben oder anderweitig, vorzugsweise reversibel, anzubringen. Ein pilz- oder tellerartiger Endabschnitt kann auch durch ein entsprechendes Ausklappen von hierfür vorgesehenen Endabschnittelementen realisiert sein. In diesem Zusammenhang ist es ebenfalls erfindungsgemäß vorgesehen, an einem Endabschnitt eines Seitenelements ein Verbindungselement zu einem Endabschnitt eines Seitenelements eines benachbarten Kindersitzes anzubringen. Ein solches Verbindungselement kann beispielsweise auf einem entsprechenden Endabschnitt eines Seitenelements aufgeschoben und durch Klemmen, mittels Bolzen oder anderen bekannten Befestigungsmechanismen fixiert werden. Auch eine unmittelbare Befestigung von Seitenelementen, die zwei unterschiedlichen Kindersitzen zugeordnet sind, ist erfindungsgemäß möglich. Auf diese Weise ist es möglich, einen optimalen Schutz nicht nur für das Kind zu gewährleisten, das einer seitlichen Kraftfahrzeuganlagefläche am nächsten sitzt, sondern auch für ein Kind, das in einem Kindersitz sitzt oder in einer Babyschale liegt, der bzw. die beispielsweise auf dem mittleren Sitz der hinteren Rückbank eines Kraftfahrzeugs befestigt ist. Ein solcherart befestigter Kindersitz bzw. eine solcherart befestigte Babyschale kann somit über einen benachbart angeordneten Kindersitz bzw. eine entsprechende Babyschale seitlich gegen eine Kraftfahrzeuganlagefläche abgestützt werden.

Des Weiteren kann das Seitenelement erfindungsgemäß optional hinsichtlich seiner Höhe verstellt werden. Eine solche Höhenverstellung kann beispielsweise in einem Längsschlitz der Sitzschale erfolgen, wobei in jeweiligen Höhenpositionen Fixiermittel vorgesehen sind, durch welche das Seitenelement in der jeweiligen Höhe fest und zuverlässig gehalten wird.

Hinsichtlich der seitlichen Erstreckung des Seitenelements sei ferner darauf hingewiesen, dass sich dieses im Wesentlichen horizontal zwischen einer Kraftfahrzeuganlagefläche und dem Kindersitz erstreckt. Auf diese Weise ist eine optimale Kraftübertragung und -umleitung möglich.

Des Weiteren ist das Seitenelement erfindungsgemäß oberhalb einer Sitzfläche des Kindersitzes angeordnet. Hierdurch kann ein Verkippen des an seiner Basis befestigten Kindersitzes bestmöglich verhindert werden. Eine Stabilisierung des Kindersitzes in seiner normalen Betriebsposition ist auf diese Weise optimal möglich.

Um erfindungsgemäß sicher zu stellen, dass etwaige Seitenkräfte bei einem Seitenaufprall nicht, wie bei bislang bekannten Kindersitzen, unmittelbar auf das in den Kindersitz befindliche Kind wirken, sondern an diesem vorbei übertragen und in die Sitzschale eingeleitet werden, ist erfindungsgemäß vorgesehen, dass das Seitenelement in einem Rückenabschnitt, insbesondere rückwärtig einer Rückenanlagefläche des Kindersitzes oder, alternativ, entlang der hinteren Begrenzungsfläche des Rückabschnitts des Kindersitzes angeordnet ist. Auf diese Weise ist eine optimale Kraftumleitung durch den erfindungsgemäßen Seitenaufprallschutz möglich, da in der Verlängerung des Seitenaufprallschutzes keinesfalls ein Kind, sondern ein Konstruktionselement des Kindersitzes, nämlich insbesondere die Sitzschale befindlich ist und aus diesem Grund eine unmittelbare Kraftübertragung auf das Kind konstruktiv vermieden ist.

Gemäß einer weiteren Ausführungsform der Erfindung weist der Kindersitz beiderseits der Sitzschale zwei, insbesondere unabhängig voneinander betätig- und einstellbare, Seitenelemente auf. Diese Seitenelemente können sich beispielsweise in unterschiedlichen Höhen an einer Anlagefläche des Kraftfahrzeugs abstützen, wodurch zum einen ein Knautschbereich und zum anderen eine Kraftumleitung bei einem Seitenaufprall optimiert werden kann. In jedem Fall ist hierbei wichtig, dass der Seitenaufprallschutz so weit wie möglich in Richtung an eine Anlagefläche des Kraftfahrzeugs ausgezogen, ausgeklappt oder ausgefahren wird, so dass möglichst eine flächige Anlage des pilz- oder tellerartigen Endabschnitts des Seitenelements an der Kraftfahrzeuganlagefläche gewährleistet ist.

Für den Fall, dass auf einer Seite des Kindersitzes mehrere Seitenelemente vorhanden sind, können sich diese entweder jeweils im Wesentlichen horizontal oder aber auch winklig zueinander erstrecken.

Des Weiteren können die beiderseits der Sitzschale vorgesehenen Seitenelemente, insbesondere innerhalb einer Sitzschalenkonstruktion, miteinander verbunden sein. Eine solche Konstruktion erhöht zum einen die Steifigkeit der Sitzschale und ist andererseits besonders einfach und passgenau zu montieren. Eine solche Ausführungsform eignet sich erfindungsgemäß besonders gut für teleskopartig ausfahrbare Seitenelemente.

Im Übrigen kann ein Seitenelement erfindungsgemäß eine Aufnahme- und/oder Anlage- und/oder Verbindungs- und/oder Fixiervorrichtung für einen An- und/oder Eingriff eines benachbarten Seitenelements, insbesondere eines benachbarten Kindersitzes aufweisen. Sofern eine solche Ausführungsform gewünscht ist, kann der pilz- oder tellerartige Endabschnitt des Seitenelements entsprechend mit einer solchen Aufnahme- und/oder Anlage- und/oder Verbindungs- und/oder Fixiervorrichtung versehen sein, so dass zwei Kindersitze mit einem entsprechenden erfindungsgemäßen Seitenaufprallschutz über diesen miteinander verbunden werden können und sich praktisch zusätzlich gegenseitig abstützen, wie bereits vorerwähnt.

Wie ebenfalls bereits vorerwähnt, kann das Seitenelement als Klappteil ausgebildet sein, das zur Verbringung von einer Ruhestellung in die Funktionsstellung und umgekehrt um eine Achse drehbeweglich ist, wobei das Klappteil wenigstens einen Halteanschlag aufweist, an welchen in Funktionsstellung ein Halteriegel angreift, so dass das Klappteil in Funktionsstellung arretiert ist, wobei die Arretierung durch eine Betätigung einer Entriegelungstaste oder eines Entriegelungsschiebers von einem Benutzer lösbar ist, die/der vorzugsweise jeweils einem Halteriegel zugeordnet ist.

Der Halteriegel ist erfindungsgemäß in Ruhestellung, insbesondere durch ein Federelement, so vorgespannt, dass der Halteriegel bei einem Verbringen des Klappteils von der Ruhestellung in die Funktionsstellung automatisch in eine vordefiniert entspannte Stellung und dadurch mit dem Halteanschlag in Eingriff bewegt und auf diese Weise in der Funktionsstellung arretiert wird.

Der Halteriegel wird hierzu erfindungsgemäß in Ruhestellung durch das Klappteil, insbesondere durch Seitenwangen des Klappteils, in seiner vorgespannten Stellung gehalten. Wenn der Halteriegel dann von seiner Ruhestellung in seine Funktionsstellung geklappt wird, wird der oder Halteriegel durch ein Mitaufklappen der Seitenwangen des Klappteils, welche den oder die Halteriegel in seiner oder ihrer vorgespannten Stellung gehalten haben, freigegeben, so dass der Halteriegel an den Seitenwangen des Klappteils vorbei gleitet oder heraus klappt und mit einem Halteanschlag des Klappteils in Anlage, vorzugsweise das Klappteil arretierende Anlage, kommt. Der Halteanschlag kann hierbei ebenfalls von den Seitenwangen des Klappteils oder einer an dem Klappteil ausgebildeten Nase gebildet sein, wobei der Halteanschlag entweder unmittelbar an dem Klappteil selbst oder alternativ an einem mit dem Klappteil fest verbundenen Haltearm ausgebildet sein kann.

Weitere Ausführungsformen der Erfindung ergeben sich aus den Unteransprüchen.

Nachfolgend wird die Erfindung anhand eines Ausführungsbeispiels beschrieben, das anhand der Abbildungen näher erläutert wird. Hierbei zeigen:
- Fig. 1: einen erfindungsgemäßen Kindersitz in vorwärts und rückwärts gerichteter Sitzposition in schematischer Darstellung;
- Fig. 2: eine Detailansicht des Rückenabschnitts des erfindungsgemäßen Kindersitzes in schematischer Darstellung;
- Fig. 3: eine erfindungsgemäße Ausführungsform eines Seitenaufprallschutzes in Funktionsstellung;
- Fig. 4: eine Detaildarstellung des erfindungsgemäßen Seitenaufprallschutzes gemäß Fig. 3 in schematischer Ansicht;
- Fig. 5 u. 6: eine weitere erfindungsgemäße Ausführungsform eines Seitenaufprallschutzes an einer Babyschale in Ruhe- und Funktionsstellung in schematischer Darstellung;
- Fig. 7 u. 8: eine Detaildarstellung des erfindungsgemäßen Seitenaufprallschutzes gemäß den Figuren 5 und 6 mit einer Ein-Tasten-Betätigung in schematischer Darstellung;
- Fig. 9: eine Seitendarstellung der erfindungsgemäßen Ein-Tasten-Betätigungsausführung gemäß Fig. 7 in schematischer Darstellung;
- Fig. 10 u. 11: eine weitere erfindungsgemäße Ausführungsform eines Seitenaufprallschutzes in Funktionsstellung in Gebrauchsansicht sowie in Detaildarstellung, jeweils in schematischer Darstellung;
- Fig. 12 u. 13: eine weitere erfindungsgemäße Ausführungsform eines Seitenaufprallschutzes in Funktions- und Ruhestellung in schematischer Darstellung;
- Fig. 14-17: eine Detaildarstellung des Funktionsmechanismus der Ausführungsform eines erfindungsgemäßen Seitenaufprallschutzes gemäß den Figuren 12 und 13 in schematischer Darstellung; und
- Fig. 18 u. 19: weitere schematische Ansichten einer erfindungsgemäßen Babyschale mit einem in eine Seitenfläche der Babyschale versenkbaren Seitenaufprallschutz in Ruhe- und Funktionsstellung, jeweils in schematischer Darstellung.

In der nachfolgenden Beschreibung werden für gleiche und gleich wirkende Teile dieselben Bezugsziffern verwendet.

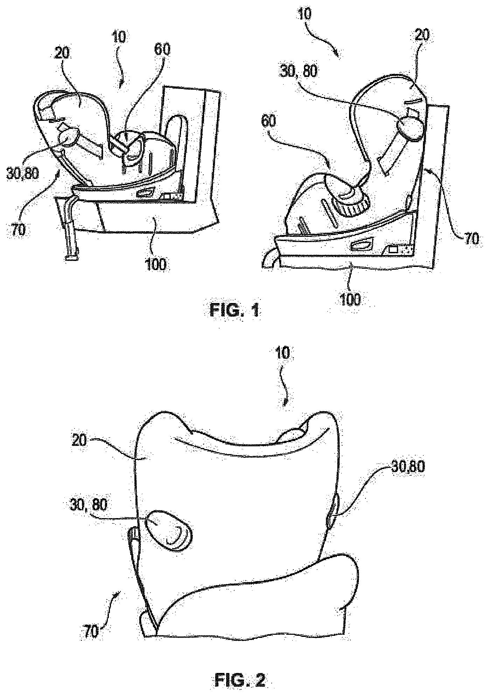

Fig. 1 zeigt in zwei unterschiedlichen Abbildungen einen erfindungsgemäßen Kindersitz 10, der auf einem Kraftfahrzeugsitz 100 in rückwärts gerichteter und vorwärts gerichteter Position angebracht ist. Der Kindersitz 10 dieser Ausführungsform ist drehbar gestaltet, wobei der Kindersitz eine Sitzschale 20 sowie ein Seitenelement 30 aufweist, das gemäß der Darstellung in Ruhestellung befindlich ist. Ruhestellung bezeichnet in diesem Fall eine eingeschobene Position des Seitenelements 30. Gemäß Fig. 1 ist erkennbar, dass sich das erfindungsgemäße Seitenelement oberhalb einer Sitzfläche 60 im Rückenabschnitt 70 des Kindersitzes 10 befindet.

Fig. 2 zeigt eine Rückansicht des Rückenabschnitts 70 des erfindungsgemäßen Kindersitzes 10, wobei beidseitig des Rückenabschnitts 70 ein Seitenelement 30 mit jeweiligem Endabschnitt 80 erkennbar ist. Der Endabschnitt 80 ist tellerartig ausgebildet und liegt an dem Rückenabschnitt 70 des Kindersitzes 10 an. Der Seitenaufprallschutz befindet sich hierbei in Ruhestellung, d.h. anliegend an den Rückenabschnitt 70 in eingeschobener Position.

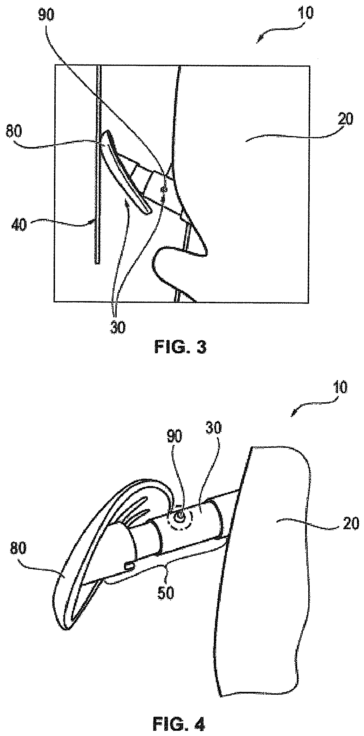

Fig. 3 zeigt den Rückenabschnitt 70 von Fig. 2, wobei das Seitenelement 30 teleskopartig nach links ausgeschoben ist und an einer Kraftfahrzeuganlagefläche 40, die schematisch dargestellt ist, anliegt. Das Seitenelement 30 weist einen Arretiermechanismus 90 auf, bei welchem sich ein Rastnocken durch eine Öffnung erstreckt. Durch ein Einschieben des Rastnockens kann das Seitenelement 30 teleskopartig zusammengeschoben und in Ruhestellung verbracht werden. Das Seitenelement wird hierzu in den Rückenabschnitt 70 hinter eine Rückenanlagefläche des Kindersitzes eingeschoben.

Fig. 4 zeigt den Seitenaufprallschutz gemäß Fig. 3 in Ansicht von vorne, wobei der pilzartige bzw. tellerartige Endabschnitt 80 des Seitenelements 30 gut erkennbar ist. Des Weiteren ist in Fig. 4 dargestellt, wie die Länge 50 des Seitenelements 30 teleskopartig verlängerbar und mittels eines Arretiermechanismus 90 festgestellt werden kann.

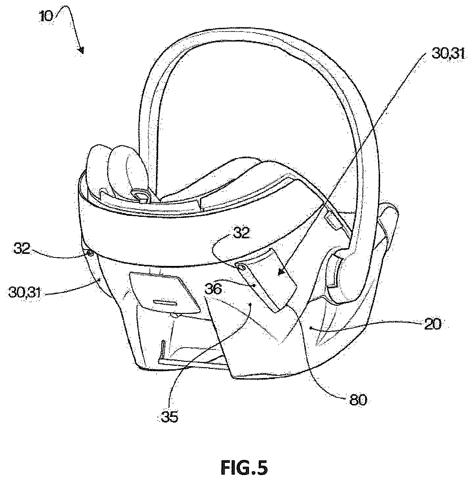

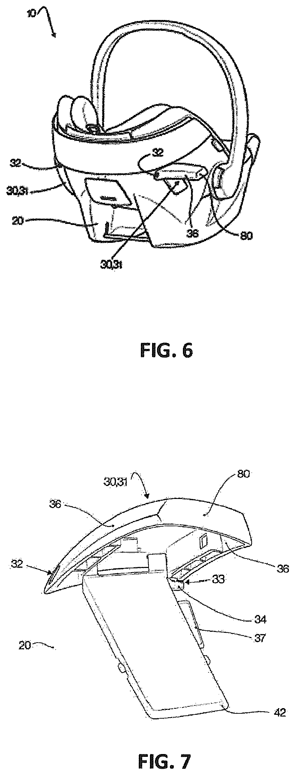

Die Figuren 5 und 6 zeigen, jeweils in schematischer Darstellung, einen Kindersitz in Form einer Babyschale 10. Der Kindersitz weist eine Sitzschale 20 auf, in deren rückwärtigem sich hinter einem Rückenabschnitt befindlichen Bereich beidseitig ein Seitenaufprallschutz angebracht ist. Der Seitenaufprallschutz besteht aus einem als Klappteil 31 ausgebildeten Seitenelement 30, das um eine Achse 32 rotiert werden kann. Das Klappteil 31 weist seinerseits zwei Seitenwangen 36 sowie einen Endabschnitt 80 auf. In Fig. 5 liegt das Klappteil 31 in Ruhestellung im Wesentlichen plan an der Seitenfläche 35 der Sitzschale 20 an, während in Fig. 6 das dort rechts gezeigte Seitenelement 30 aufgeklappt vorliegt, wobei das Klappteil 31 im Wesentlichen rechtwinklig von der Sitzschale 20 des Kindersitzes 10 absteht. Das in den Figuren 5 und 6 an der linken Seite des Kindersitzes angeordnete Klappteil 31 des Seitenaufprallschutzes befindet sich jeweils in Ruhestellung, d.h. im Wesentlichen plan an der Seitenfläche 35 der Sitzschale 20 anliegend.

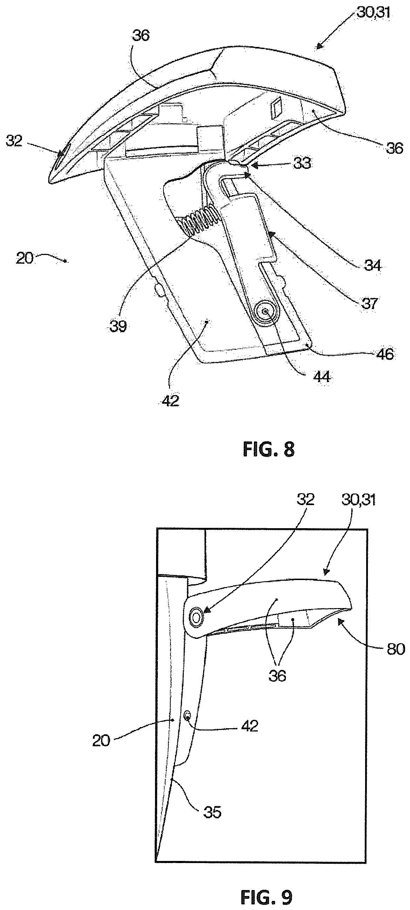

In den Figuren 7 und 8 ist das Seitenelement 30 aus Fig. 6 in Detaildarstellung gezeigt, wobei die in den Figuren 7 und 8 dargestellte erfindungsgemäße Seitenaufprallschutzlösung eine Ein-Tasten-Lösung darstellt, bei welcher das Klappteil 31 einseitig, d.h. in den Abbildungen 7 und 8 auf der rechts gezeigten Seite einen Halteanschlag 33 aufweist, an welchen ein Halteriegel 34 angreift. Fig. 7 zeigt hierbei eine schematische Darstellung des Seitenaufprallschutzes, wie er an einem Kindersitz oder einer Babyschale zur Anwendung kommt, nämlich derart, dass eine Mechanik, durch welche der Halteriegel 34 betätigt wird, durch eine Abdeckplatte 42 abgedeckt ist. Aus dieser Abdeckplatte erstreckt sich der Halteriegel 34 seitlich so heraus, dass er mit einem Halteanschlag 33 in Anlage kommt, so dass das Klappteil 31 sicher in seiner Funktionsstellung gehalten ist und nur durch eine Betätigung der Entriegelungstaste 37 und einer damit einhergehenden Entriegelung wieder in seine Ruhestellung verbracht werden kann, wobei der Halteriegel 34 beim Betätigen der Entriegelungstaste 37 aus seinem Eingriff mit dem Halteanschlag 33 heraus bewegt wird.

Fig. 8 zeigt eine Detailansicht des zugrunde liegenden Arretierungsmechanismus, der eine automatische Ineingriffnahme des Halteanschlags 33 mit dem Halteriegel 34 ermöglicht, wobei ein Teil der Abdeckplatte 42 zur Veranschaulichung des Mechanismus entfernt ist. Es ist in Fig. 8 hierbei zu erkennen, dass der Halteriegel 34 sowie die Entriegelungstaste 37 einstückig ausgebildet sind und einen Hebel bilden, der um eine Halteriegelachse 44 verschwenkt werden kann und so durch ein Federelement 39 vorgespannt ist, dass der Halteriegel 34 automatisch in eine Eingriffsposition mit dem Halteanschlag 33 gedrängt wird, sobald das Klappteil 31 aus seiner Ruhestellung in seine Funktionsstellung bewegt wird. Solange sich das Klappteil 31 in seiner Ruhestellung befindet, wird der Halteriegel 34 hierbei durch eine ihm zugeordnete Seitenwange 36 des Klappteils 31 in seine vorgespannte Position zurück gedrängt, aus welcher der Halteriegel 34 bei einem Hochklappen des Klappteils 31 in die Funktionsstellung automatisch in die Eingriffsposition mit dem Halteanschlag 33 bewegt wird, wenn die Seitenwange 36 des Klappteils 31 so weit nach oben weg geklappt ist, dass ein Zurückhalten des Halteriegels 34 durch die Wange 36 nicht mehr möglich ist. Es sei an dieser Stelle darauf hingewiesen, dass die Begriffe "oben", "unten", "rechts" und "links" im Zuge dieser Beschreibung nur einer besseren Veranschaulichung der in den jeweiligen Figuren dargestellten Abbildungen dienen, diese Begriffe jedoch nicht einschränkend wirken, da der erfindungsgemäße Seitenaufprallschutz zwar bevorzugt in der dargestellten Weise an einem Kindersitz oder einer Babyschale angebracht wird, eine andere funktionsgemäße Ausrichtung jedoch ebenso möglich ist, beispielsweise indem das Klappteil nicht von unten nach oben von der Ruhe- in die Funktionsstellung, sondern von oben nach unten von der Ruhe in die Funktionsstellung befördert wird. Dementsprechend kann das Klappteil 31 funktionsgemäß auch von hinten nach vorne oder von vorne nach hinten oder diagonal geklappt werden, wobei letztendlich maßgeblich ist, dass eine Abstützung des Kindersitzes bzw. der Babyschale durch das Seitenelement 30, respektive das Klappteil 31 erfolgen kann.

Wie ferner in den Figuren 7 und insbesondere 8 zu erkennen ist, wird gleichzeitig mit dem Halteriegel 34 auch die an demselben Hebel befindliche Entriegelungstaste 37 bei einem Ausklappen des Halteriegels 34 und einem in Eingriff gehen mit dem Halteanschlag 33, nach der Seite gedrückt, so dass sich die Entriegelungstaste 37 durch die Abdeckplatte 42 nach außen erstreckt. Zum Lösen des Eingriffs des Halteriegels 34 von dem Halteanschlag 33 kann die Entriegelungstaste 37 sodann von einem Benutzer in Richtung der Abdeckplatte 42 gedrückt werden, wodurch gleichzeitig der Halteriegel 34 aus dem Eingriff mit dem Halteanschlag 33 entfernt wird, so dass ein Zurückklappen des Klappteils 31 von der Funktionsstellung in die Ruhestellung möglich wird.

Fig. 9 zeigt die erfindungsgemäße Ausführung eines Seitenaufprallschutzes, der an eine Seitenfläche 35 einer Sitzschale 20 angebracht ist entsprechend der Ausführungsform, die in den Figuren 7 und 8 dargestellt ist, in schematischer Darstellung. Es ist hierbei zu erkennen, dass die Achse 32, um welche das Klappteil 31 bewegbar ist, sich außerhalb der Sitzschale befindet.

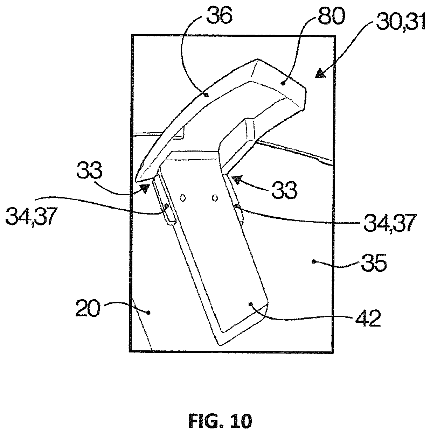

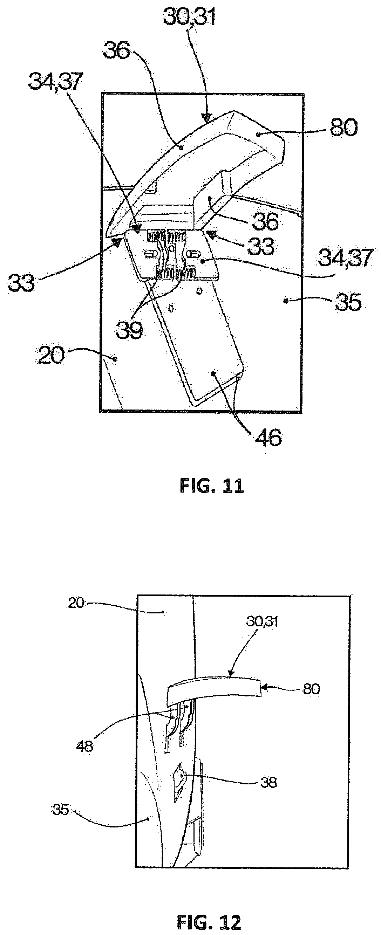

Die Figuren 10 und 11 zeigen eine weitere Ausführungsform eines erfindungsgemäßen Seitenaufprallschutzes, wobei gemäß dieser Ausführungsform jeweils zwei Halteriegel 34 als auch zwei Entriegelungstasten 37 vorgesehen sind, wobei die Halteriegel 34 und die Entriegelungstasten 37 durch das gleiche Bauelement dargestellt werden, wobei ein Halteriegelbereich 34 wiederum an einem Halteanschlag 33 angreift, wobei der Halteanschlag 33 an beiden Seitenwangen 36 des Klappteils 31 ausgebildet ist. Die beiden Halteriegel 34, respektive Entriegelungstasten 37 sind wiederum durch Federelemente 39 vorgespannt, so dass sie in Ruhestellung von den Seitenwangen 36 des Klappteils 31 zurück gedrängt und in dieser Stellung gespannt vorliegen und bei einem Aufklappen des Klappteils 31 in ihre entspannte und das Klappteil 31 blockierende Stellung schnappen, so dass das Klappteil 31 gegen ein Zurückfallen in seine Ruhestellung gesichert ist und bis zu einem Betätigen beider Entriegelungstasten 37 in seiner Funktionsstellung verbleibt. In Fig. 10 ist wiederum ein Seitenaufprallschutz dargestellt, wie er tatsächlich zur Anwendung kommt, nämlich mit einer Abdeckplatte 42, welche eine Basisplatte 46 überdeckt, die in Fig. 11, bei abgenommener Abdeckplatte 42 sichtbar ist.

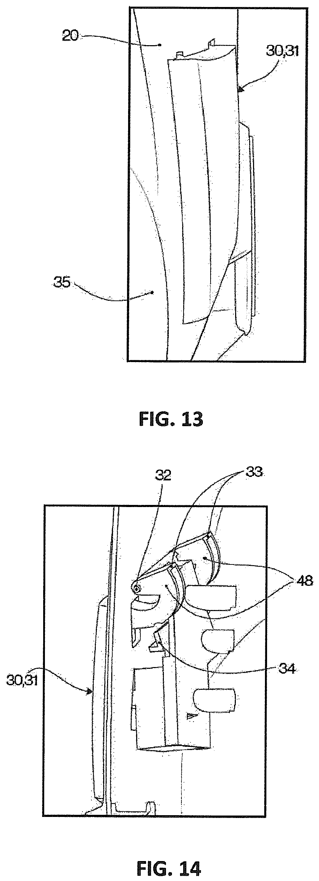

Die Figuren 12 und 13 zeigen eine weitere erfindungsgemäße Ausführungsform eines Seitenaufprallschutzes mit einem als Klappteil 31 ausgebildeten Seitenelement 30, jeweils in schematischer Darstellung, wobei das Klappteil 31 sich gemäß Fig. 12 in Funktionsstellung und gemäß Fig. 13 in Ruhestellung befindet. In Ruhestellung liegt das Klappteil 31 im Wesentlichen plan an der Seitenfläche 35 der Sitzschale 20 an, wobei in Fig. 12 zu erkennen ist, dass das Klappteil 31 an zwei Haltearmen 48 angelenkt ist, die sich durch jeweils zugeordnete Öffnungen durch die Sitzschale 20 hindurch erstrecken. Des Weiteren ist in Fig. 12 zu erkennen, dass sich ein Entriegelungsschieber 38 ebenfalls durch eine zugeordnete Öffnung durch die Sitzschale 20 hindurch erstreckt und in vertikaler Richtung, entsprechend dem angedeuteten Pfeil sowie in entgegen gesetzter Richtung bewegbar ist.

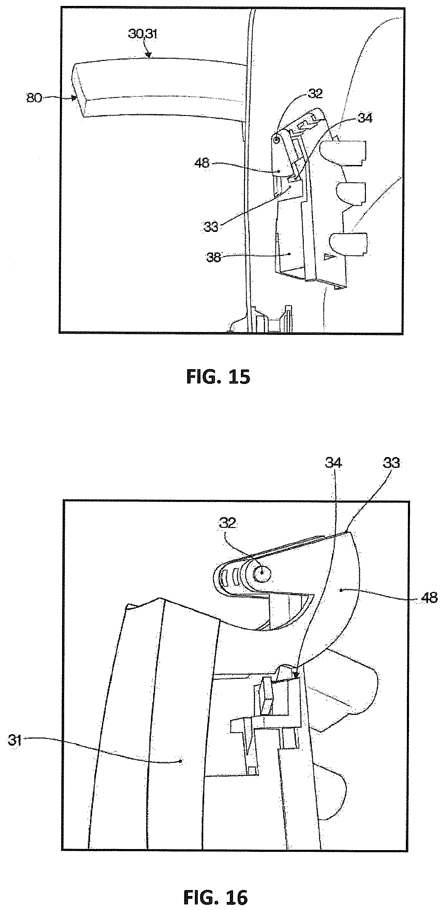

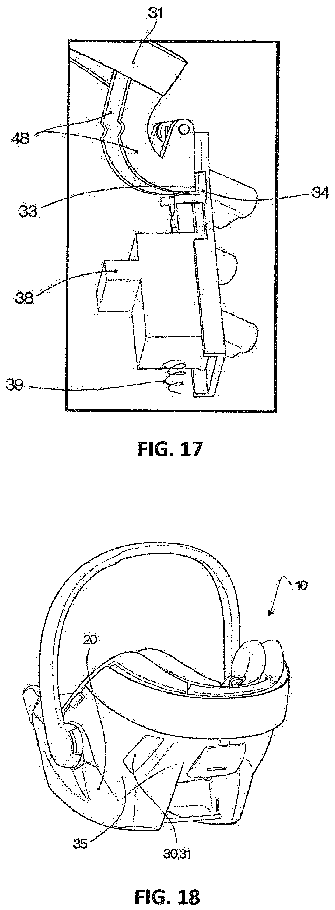

In den Figuren 14 bis 17 ist der Funktionsmechanismus der Ausführungsform gemäß den Figuren 12 und 13 schematisch und im Detail näher dargestellt. So ist in den Figuren 14 bis 17 zu erkennen, dass die Haltearmen 48 um eine Achse 32 bewegbar und an dieser Achse 32 gelagert sind. An den Haltearmen 48 befindet sich jeweils ein Halteanschlag 33, der mit einem Halteriegel 34 in Eingriff gelangt, wenn das Klappteil 31 von seiner Ruhestellung in seine Funktionsstellung befördert wird. Diese Ineingriffnahme ist in den Figuren 15 und 17 besonders gut zu erkennen, da sich in den Figuren 15 und 17 das Klappteil 31 in Funktionsstellung befindet. Der Halteriegel 34 ist hierbei wirkverbunden mit dem Entriegelungsschieber 38, nämlich im Wesentlichen einstückig mit diesem ausgebildet, wobei das den Halteriegel 34 und den Entriegelungsschieber 38 umfassende Bauelement durch ein Federelement 39 in Funktionsstellung gedrängt wird, so dass der Halteriegel 34 in einer vorgespannten Stellung befindlich ist, solange sich das Klappteil 31 in Ruheposition befindet. Die Haltearme 48 sind hierbei so geformt, dass sie das den Halteriegel 34 aufweisende Bauelement in der vorgespannten Stellung halten, solange das Klappteil 31 nicht vollständig in seine Funktionsstellung geklappt ist. Sobald das Klappteil 31 seine Funktionsstellung erreicht hat, schnappt der Halteriegel 34 sodann in Eingriff mit dem Halteanschlag 33, der an den Haltearmen 48 ausgebildet ist. Diese Funktionalität ist in den Figuren 16 und 17 besonders gut zu erkennen.

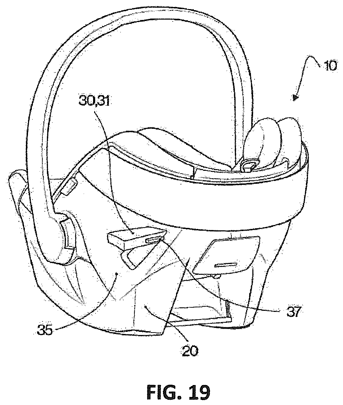

Die Figuren 18 und 19 zeigen eine weitere Ausführungsform eines erfindungsgemäßen Kindersitzes in Form einer Babyschale 10, wobei gemäß dieser Ausführungsform ein Klappteil 31 so in eine Seitenfläche 35 der Sitzschale 20 eingeklappt werden kann, dass das Klappteil 31 in Ruheposition im Wesentlichen bündig mit der Seitenfläche 35 verläuft. Diese Position ist in Fig. 18 dargestellt. In Fig. 19 ist das Klappteil 31 in Funktionsstellung ausgeklappt, wobei die Entriegelungstaste 37 sichtbar ist. Bei der in den Figuren 18 und 19 dargestellten erfindungsgemäßen Ausführungsform befindet sich die Drehachse 32 des Klappteils 31 wiederum innerhalb der Sitzschale 20, so dass diese in den Figuren 18 und 19 nicht sichtbar ist. Es handelt sich hierbei wiederum um einen Schwenkmechanismus, wie er in den Figuren 12 bis 17 beschrieben ist, bei welchen sich das Bauelement, welches den Halteriegel 34 sowie den Entriegelungsschieber 38 aufweist, in Ruhestellung in einer zurückgedrängten unteren Position und in Funktionsstellung in einer entspannten oberen Position befindet, wobei auch hier wieder darauf hingewiesen sei, dass die Richtungsangaben "unten" und "oben" nur zur Erläuterung dienen und der erfindungsgemäße Seitenaufprallschutz auch in einer anderen funktionsgemäßen Ausrichtung an einem Kindersitz oder einer Babyschale angebracht sein kann. Zum Entriegeln des Klappteils 31 wird gemäß dieser Ausführungsform der Entriegelungsschieber 38 in der in Fig. 12 durch den Pfeil angedeuteten Weise nach unten bewegt. Hierbei gerät der Halteanschlag 30 aus dem Eingriff des Halteriegels 34 heraus, so dass die Haltearme 48 gemäß den Figuren 16 und 17 nach hinten verschwenkt werden können, wobei das Klappteil 31 in Anlage mit der Sitzschale 20 kommt und, je nach Ausführungsform, außen an der Sitzschale oder in die Seitenfläche 35 der Sitzschale hinein versenkt in Ruhestellung kommt.

An dieser Stelle sei darauf hingewiesen, dass alle oben beschriebenen Teile für sich allein gesehen und in jeder Kombination, insbesondere die in den Zeichnungen dargestellten Details, als erfindungswesentlich beansprucht werden. Abänderungen hiervon sind dem Fachmann geläufig.

### Bezugszeichen

- 10: Kindersitz, Babyschale
- 20: Sitzschale
- 30: Seitenelement
- 31: Klappteil
- 32: Achse
- 33: Halteanschlag
- 34: Halteriegel
- 35: Seitenfläche
- 36: Seitenwangen
- 37: Entriegelungstaste
- 38: Entriegelungsschieber
- 39: Federelement
- 40: Kraftfahrzeuganlagefläche
- 42: Abdeckplatte
- 44: Halteriegelachse
- 46: Basisplatte
- 48: Haltearm
- 50: Länge
- 60: Sitzfläche
- 70: Rückenabschnitt
- 80: Endabschnitt
- 90: Arretiermechanismus
- 100: Kraftfahrzeugsitz

## Patentansprüche

1. Kindersitz (10) oder Babyschale zur Anbringung auf einem Kraftfahrzeugsitz, insbesondere Kraftfahrzeugseitensitz, mit einer Sitzschale (20) und einem an dieser angebrachten Seitenaufprallschutz, der von einer, insbesondere innerhalb einer Standardbreite gelegenen, Ruhestellung in eine, insbesondere außerhalb derselben gelegene, Funktionsstellung und umgekehrt bringbar ist,
**dadurch gekennzeichnet, dass**
der Seitenaufprallschutz, insbesondere beidseitig der Sitzschale (20), so positioniert ist, dass er etwaige Seitenkräfte nicht unmittelbar auf den Körper des Kindes überträgt, sondern am Körper des Kindes vorbei und in die Sitzschale einleitet.

2. Kindersitz nach Anspruch 1,
**dadurch gekennzeichnet, dass**
der Seitenaufprallschutz so positioniert ist, dass er etwaige Seitenkräfte hinter dem Rücken eines im Kindersitz sitzenden Kindes vorbei überträgt und in die Sitzschale einleitet.

3. Kindersitz nach Anspruch 1 oder 2,
**dadurch gekennzeichnet, dass**
der Seitenaufprallschutz ein Seitenelement umfasst, das an einer Seitenfläche (35) der Sitzschale (20) angebracht ist.

4. Kindersitz nach Anspruch 1, 2 oder 3,
**dadurch gekennzeichnet, dass**
der Seitenaufprallschutz ein/das Seitenelement (30) umfasst, das in Ruhestellung an einer Seitenfläche der Sitzschale (20), insbesondere im Wesentlichen flach, anliegt oder im Wesentlichen bündig mit einer Seitenfläche (35) der Sitzschale (20) abschließt, insbesondere in die Seitenfläche (35) eingeschoben und/oder eingeklappt ist.

5. Kindersitz nach Anspruch 3 oder 4,
**dadurch gekennzeichnet, dass**
das Seitenelement (30) zur Benutzung in Funktionsstellung ausklappbar, ausschwenkbar, teleskopartig ausfahr- oder ausschiebbar oder aus der Ruhestellung entnehmbar und an einer entsprechenden Aufnahme für das Seitenelement (30) anbringbar, insbesondere befestigbar, ist.

6. Kindersitz nach einem der vorhergehenden Ansprüche,
**dadurch gekennzeichnet, dass**
das Seitenelement (30) hinsichtlich seiner Länge (50) und/oder Höhenposition einstellbar ist und/oder
dass
das Seitenelement (30), insbesondere zur Längeneinstellung und/oder Fixierung, einen Rast-, Schnapp-, Klapp-, Ratschen-, Teleskop-, Gewinde- bzw. Schraub- oder Flaschenzugmechanismus aufweist und/oder dass
das Seitenelement (30) oberhalb einer Sitzfläche (60) des Kindersitzes (10) angeordnet ist.

7. Kindersitz nach einem der vorhergehenden Ansprüche,
**dadurch gekennzeichnet, dass**
das Seitenelement (30) in einem Rückenabschnitt (70), insbesondere rückwärtig einer Rückenanlagefläche des Kindersitzes (10) angeordnet ist oder, alternativ, entlang der hinteren Begrenzungsfläche des Rückenabschnitts des Kindersitzes angeordnet ist.

8. Kindersitz nach einem der vorhergehenden Ansprüche,
**dadurch gekennzeichnet, dass**
der Kindersitz (10) beiderseits der Sitzschale (20) zwei, insbesondere unabhängig voneinander betätig- und einstellbare, Seitenelemente (30) aufweist.

9. Kindersitz nach einem der vorhergehenden Ansprüche,
**dadurch gekennzeichnet, dass**
die beiderseits der Sitzschale (20) vorgesehenen Seitenelemente (30), insbesondere innerhalb einer Sitzschalenkonstruktion, miteinander verbunden sind.

10. Kindersitz nach einem der vorhergehenden Ansprüche 3 bis 9,
**dadurch gekennzeichnet, dass**
das Seitenelement (30) als Klappteil (31) ausgebildet ist, das zur Verbringung von der Ruhestellung in die Funktionsstellung und umgekehrt um eine Achse (32) drehbeweglich ist, wobei das Klappteil (31) wenigstens einen Halteanschlag (33) aufweist, an welchen in Funktionsstellung ein Halteriegel (34) angreift, so dass das Klappteil (31) in Funktionsstellung arretiert ist, wobei die Arretierung durch eine Betätigung einer Entriegelungstaste (37) oder eines Entriegelungsschiebers (38) von einem Benutzer lösbar ist, die/der vorzugsweise jeweils einem Halteriegel (34) zugeordnet ist,
vorzugsweise wobei der Halteriegel (34) in Ruhestellung, insbesondere durch ein Federelement (39), so vorgespannt ist, so dass der Halteriegel (34) bei einem Verbringen des Klappteils (31) von der Ruhestellung in die Funktionsstellung, automatisch in eine vordefiniert entspannte Stellung und dadurch mit dem Halteanschlag (33) in Eingriff bewegt wird.

11. Kindersitz nach Anspruch 10,
**dadurch gekennzeichnet, dass**
der Halteriegel (34) in Ruhestellung durch das Klappteil (31), insbesondere durch Seitenwangen (36) des Klappteils (31), in seiner vorgespannten Stellung gehalten wird.

12. Kindersitz nach einem der vorhergehenden Ansprüche 10 bis 11,
**dadurch gekennzeichnet, dass**
das Klappteil (31) eine Zahnung aufweist, durch die eine Mehrzahl von Halteanschlägen (33) definiert ist.

13. Kindersitz nach einem der vorhergehenden Ansprüche,
**dadurch gekennzeichnet, dass**
das Seitenelement (30) eine Aufnahme- und/oder Anlage- und/oder Verbindungs- und/oder Fixiervorrichtung für einen An- und/oder Eingriff eines benachbarten Seitenelements (30), insbesondere eines benachbarten Kindersitzes (10) aufweist.

14. Kindersitz nach einem der vorhergehenden Ansprüche,
**dadurch gekennzeichnet, dass**
das Seitenelement (30) einen, gegebenenfalls ausklappbaren oder aufschraub- oder aufsteckbaren, pilz- oder tellerartigen Endabschnitt (90) aufweist.

15. Seitenaufprallschutz mit einem Seitenelement (30), das als Klappteil (31) ausgebildet ist, das zur Verbringung von einer Ruhestellung in eine Funktionsstellung und umgekehrt um eine Achse (32) drehbeweglich ist, wobei das Klappteil (31) wenigstens einen Halteanschlag (33) aufweist, an welchen in Funktionsstellung ein Halteriegel (34) angreift, so dass das Klappteil (31) in Funktionsstellung arretiert ist, wobei die Arretierung durch eine Betätigung einer Entriegelungstaste (37) oder eines Entriegelungsschiebers (38) von einem Benutzer lösbar ist, die/der vorzugsweise jeweils einem Halteriegel (34) zugeordnet ist, zur Anbringung an einem Kindersitz (10) und/oder einer Babyschale (10), insbesondere durch eine Kleb-, Niet- oder Schraubverbindung.
